# EUROPÄISCHE PATENTSCHRIFT

(11) **EP 0 518 820 B1**
(45) Veröffentlichungstag und Bekanntmachung des Hinweises auf die Patenterteilung: **05.04.1995**
(21) Anmeldenummer: 92810424.9
(22) Anmeldetag: 03.06.1992
(51) Int. Cl.: B65D 81/09, B65D 65/46, B65D 81/03

(54) **Polstermaterial für Verpackungen**
Packaging dunnage
Matière de garnissage

(30) Priorität: 11.06.1991 CH 1737/91
(43) Veröffentlichungstag der Anmeldung: 16.12.1992
(73) Patentinhaber: Greither, Peter, CH-9533 Kirchberg (CH)
(72) Erfinder: Engel, Dieter Wolfgang, CH-9500 Wil (CH)
(74) Vertreter: Wenger, René

(56) Entgegenhaltungen:
- EP-A- 0 376 201
- DE-A- 3 931 043
- FR-A- 2 601 930
- FR-A- 2 605 335
- US-A- 3 667 593
- US-A- 4 955 480

## Beschreibung

Die Erfindung betrifft ein Polstermaterial für Verpackungen gemäss dem Oberbegriff von Anspruch 1. Derartiges Polstermaterial wird dazu gebraucht, den Hohlraum zwischen einem Verpackungsgut und einem Verpackungsbehälter auszufüllen. Füllstoffe dieser Art bestehen in der Regel aus Schaumstoff-Flocken, und zwar sowohl aus Hartschaum als auch aus Weichschaum. Ein Nachteil dieser Materialien besteht darin, dass ihre Entsorgung grosse Probleme bereitet. Es handelt sich dabei nämlich in der Regel um schwer abbaubare chemische Verbindungen, wie z.B. Polystyrol, Polyurethan usw. Bei der Verbrennung dieser Stoffe werden bekanntlich umweltschädigende Verbindungen freigesetzt. In zunehmendem Masse wird der Einsatz derartiger Verpackungsmaterialien auch durch die Gesetzgebung eingeschränkt.

Durch die US-A-3,667,593 ist ein schüttfähiges, kapselförmiges Polstermaterial bekannt geworden, das aus zusammengeschweissten Folienabschnitten besteht. Die kapselförmigen Hohlkörper sind dabei luftgefüllt. Die Folien bestehen jedoch aus einem biologisch nicht abbaubaren Kunststoffmaterial, was die eingangs erwähnten Entsorgungsprobleme zur Folge hat.

Durch die EP-A-376 201 ist ein biologisch abbaubares Verpackungsmaterial aus Stärke mit einem Gewichtsanteil von wenigstens 45 % Amylose bekannt geworden. Das Produkt kann in verschiedene Formen, wie z.B. Behälter, Folien oder Strangmaterial gebracht werden. Eine Verformung zu Kapseln ist jedoch bei diesem Stärkematerial nicht vorgesehen.

Es ist daher eine Aufgabe der Erfindung, einen Ersatz für die bisher verwendeten Polstermaterialien zu finden, der bei gleichbleibenden Eigenschaften umweltverträglich ist und der bezüglich der Entsorgung keine grossen Probleme verursacht. Diese Aufgabe wird durch ein Polstermaterial gelöst, das die Merkmale der Ansprüche 1 oder 3 aufweist.

Derartige Kapseln sind in der Pharmaindustrie bereits seit langem als Darreichungsform für Medikamente bekannt. Ihre Produktion ist daher an sich seit langem bekannt und verursacht keine Probleme. Es können Kapseln von ganz unterschiedlichen Formen und Grössen bis zu mehreren Zentimetern Länge hergestellt werden. Bezüglich Einzelheiten der Kapselherstellung wird verwiesen auf Lachman/Lieberman/Kanig, The Theory and Practice of Industrial Pharmacy, 3rd Edition, Philadelphia 1986, insbesondere auf das Kapitel "Capsules".

Die Biopolymere auf Gelatinebasis, aus denen derartige Kapseln hergestellt werden, haben gerade als Verpackungsmaterial hervorragende Eigenschaften. Sie sind ungiftig, unbrennbar, wiederverwertbar und biologisch abbaubar. Es kann sich dabei um Hartgelatine oder um Gelatine mit Weichmachern wie Glyzerin usw. handeln. Aber auch Kombinationen von Gelatine und anderen Biopolymeren wie z.B. Stärke, Agar-Agar oder Gummiarabikum wären theoretisch denkbar.

Die Kapselherstellung kann mit allen bekannten Verfahren wie z.B. mittels Formwalzen mit Füllkeil, Spritzgiessen, "Dip-moulding" usw. erfolgen.

Die Kapseln können ausschliesslich mit Luft gefüllt sein, wobei ein elastischer und flexibler Körper erreicht wird, der auch thermisch gut isoliert und der ein geringes Gewicht aufweist. Da Kapseln, die zu pharmazeutischen Zwecken verwendet werden, mit einer Flüssigkeit oder mit einem Pulver gefüllt werden müssen, sind der äusseren Form gewisse Grenzen gesetzt. Enthält dagegen die Kapsel lediglich einen Lufteinschluss, so sind auch kompliziertere Kapselformen denkbar, die sich besser für Verpackungszwecke eignen. So wäre es z.B. denkbar, eine äussere Form der Kapseln zu wählen, bei welcher die einzelnen Kapseln relativ gut zusammenhalten.

Nachdem die Fülltechnik der Kapseln gut beherrscht wird, ist es selbstverständlich auch denkbar, die Kapseln mit einer Flüssigkeit zu füllen. Damit könnten einerseits die mechanischen Eigenschaften der Kapseln wie z.B. ihre Elastizität beeinflusst werden. Denkbar wäre aber auch die Erzielung thermischer Eigenschaften, wie sie mit den bisher bekannten Polstermaterialien überhaupt nicht erreicht werden konnten. So könnten die Kapseln mit einem Stoff mit thermischen Akkumulator-Eigenschaften gefüllt werden. Bekannt sind derartige Stoffe beispielsweise von Kühlelementen, die im Gefrierschrank gekühlt werden und die bei normaler Umgebungstemperatur grosse Wärmemengen aufnehmen, bis sie den Aggregatzustand wieder wechseln. Als schüttfähiges Verpackungspolstermaterial in Kapselform hätten derartige Stoffe erhebliche Vorteile. Dieses Material könnte z.B. für den Versand von empfindlichen Lebensmitteln wie z.B. Fisch, Schalentiere usw. verwendet werden.

Zum Schutz vor Feuchtigkeit können die Kapseln mit einer Schicht aus hydrophobierenden Stoffen wie z.B. Wachse, Schellack, Zellulosederivate usw. überzogen werden.

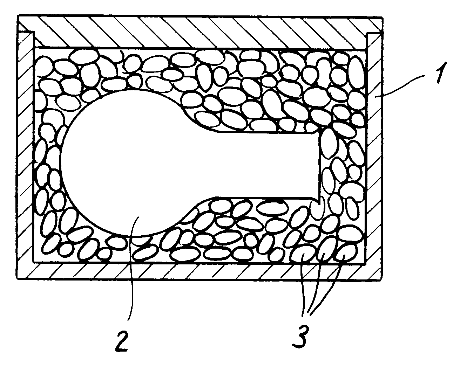

Die einzige Figur zeigt einen Querschnitt durch eine Verpackung 1, in welcher ein Gegenstand 2 verpackt wird. Die Hohlräume um den Gegenstand sind mit Kapseln 3 z.B. aus Weichgelatine ausgefüllt.

## Patentansprüche

1. Polstermaterial für Verpackungen bestehend aus schüttfähigen, kapselförmigen Hohlkörpern, dadurch gekennzeichnet, dass die Hohlkörper (3) eine Hülle aus Gelatine aufweisen.

2. Polstermaterial nach Anspruch 1, dadurch gekennzeichnet, dass die Hülle aus Gelatine mit Weichmachern besteht.

3. Polstermaterial für Verpackungen bestehend aus schüttfähigen, kapselförmigen Hohlkörpern, dadurch gekennzeichnet, dass die Hohlkörper (3) eine Hülle aus einer Kombination von Gelatine und einem anderen Biopolymer aufweisen.

4. Polstermaterial nach Anspruch 3, dadurch gekennzeichnet, dass die Hülle aus einer Kombination von Gelatine und Stärke besteht.

5. Polstermaterial nach einem der Ansprüche 1 bis 4, dadurch gekennzeichnet, dass die Hohlkörper (3) mit Luft gefüllt sind.

6. Polstermaterial nach einem der Ansprüche 1 bis 4, dadurch gekennzeichnet, dass die Hohlkörper (3) mit einer Flüssigkeit gefüllt sind.

7. Polstermaterial nach einem der Ansprüche 1 bis 4, dadurch gekennzeichnet, dass die Hohlkörper (3) mit einem Stoff mit thermischen Akkumulator-Eigenschaften gefüllt sind.

8. Polstermaterial nach einem der Ansprüche 1 bis 7, dadurch gekennzeichnet, dass die Oberfläche der Hohlkörper (3) mit einer Schicht aus hydophobierenden Stoffen überzogen ist.

## Claims

1. A padding material for packagings comprising pourable hollow bodies in capsule form characterised in that the hollow bodies (3) have a casing of gelatin.

2. A padding material according to claim 1 characterised in that the casing comprises gelatin with plasticisers.

3. A padding material for packagings comprising pourable hollow bodies in capsule form characterised in that the hollow bodies (3) have a casing comprising a combination of gelatin and another biopolymer.

4. A padding material according to claim 3 characterised in that the casing comprises a combination of gelatin and starch.

5. A padding material according to one of claims 1 to 4 characterised in that the hollow bodies (3) are filled with air.

6. A padding material according to one of claims 1 to 4 characterised in that the hollow bodies (3) are filled with a liquid.

7. A padding material according to one of claims 1 to 4 characterised in that the hollow bodies (3) are filled with a substance with thermal accumulator properties.

8. A padding material according to one of claims 1 to 7 characterised in that the surface of the hollow bodies (3) is covered with a layer of hydrophobing substances.

## Revendications

1. Matériau de rembourrage pour emballages, formé de corps creux aptes à être versés et en forme de capsules, caractérisé en ce que les corps creux (3) comportent une enveloppe de gélatine.

2. Matériau de rembourrage selon la revendication 1, caractérisé en ce que l'enveloppe se compose de gélatine contenant des plastifiants.

3. Matériau de rembourrage pour emballages, formé de corps creux aptes à être versés et en forme de capsules, caractérisé en ce que les corps creux (3) comportent une enveloppe composée d'une combinaison de gélatine et d'un autre biopolymère.

4. Matériau de rembourrage selon la revendication 3, caractérisé en ce que l'enveloppe se compose d'une combinaison de gélatine et d'amidon.

5. Matériau de rembourrage selon l'une des revendications 1 à 4, caractérisé en ce que les corps creux (3) sont remplis d'air.

6. Matériau de rembourrage selon l'une des revendications 1 à 4, caractérisé en ce que les corps creux (3) sont remplis d'un liquide.

7. Matériau de rembourrage selon l'une des revendications 1 à 4, caractérisé en ce que les corps creux (3) sont remplis d'une substance présentant des propriétés d'accumulateur thermique.

8. Matériau de rembourrage selon l'une des revendications 1 à 7, caractérisé en ce que la surface des corps creux (3) est recouverte d'une couche de substances hydrophobes.
